# EUROPÄISCHE PATENTSCHRIFT

(11) **EP 1 973 685 B1**
(45) Veröffentlichungstag und Bekanntmachung des Hinweises auf die Patenterteilung: **26.06.2013**
(21) Anmeldenummer: 07700221.0
(22) Anmeldetag: 12.01.2007
(51) Int. Cl.: B23K 11/00, F01N 3/022

(54) **DISKONTINUIERLICHES VERSCHWEISSEN VON METALLISCHEN FASERN**
DISCONTINUOUS WELDING OF METALLIC FIBRES
SOUDAGE DISCONTINU DE FIBRES METALLIQUES

(30) Priorität: 13.01.2006 DE 102006001833
(43) Veröffentlichungstag der Anmeldung: 01.10.2008
(73) Patentinhaber: Emitec Gesellschaft für Emissionstechnologie mbH, 53797 Lohmar (DE)
(72) Erfinder: HAESEMANN, Gottfried Wilhelm, 51515 Kürten (DE)
(74) Vertreter: Heine, Christian Klaus
(86) Internationale Anmeldenummer: PCT/EP2007/000233
(87) Internationale Veröffentlichungsnummer: WO 2007/082684

(56) Entgegenhaltungen:
- DE-A1- 1 901 777
- DE-A1- 10 357 693
- US-A- 5 679 441

## Beschreibung

Die vorliegende Erfindung betrifft eine Vorrichtung und ein Verfahren zum Verschweißen von metallischen Fasern zu einem Gestrick mit einer vorgegebenen Breite. Derartige metallische Gestricke werden bevorzugt im Bereich der Abgasnachbehandlung eingesetzt, beispielsweise als Filter- oder Dämpfungsmaterial.

Aus der WO 2004/039580 A1 ist ein Verfahren zur Herstellung eines porösen, plattenförmigen Metallverbundes bekannt. Dort wird vorgeschlagen, dass die Metallfasern in einem Arbeitsschritt gepresst und miteinander verschweißt werden. Zur Durchführung des Schweißverfahrens werden die Metallfasern in eine dafür vorgesehene Schweißvorrichtung eingebracht. Zum Verschweißen der Fasern wird ein Haufwerk von Metallfasern zwischen zwei flächenhaft ausgebildeten Elektroden angeordnet, die eine zum Verschweißen hinreichende Presskraft bezüglich des Haufwerkes bereitstellen. Als Schweißverfahren wird ein Impulsschweißverfahren, vorzugsweise das Kondensatorimpulsschweißverfahren, vorgeschlagen.

Das bekannte Schweißverfahren zur Herstellung derartiger metallischer Vliese hat sich zwar gut bewährt, allerdings besteht gerade im Hinblick auf die Serienfertigung teilweise die Gefahr, dass die Schweißbedingungen nicht über die gesamte Breite gleichmäßig aufrecht erhalten werden können, sodass das Vlies letztendlich unerwünschte Schwankungen hinsichtlich bestimmter Materialkennwerte aufweisen kann.

In der US 5,679,441 A ist ein kontinuierlicher Schweißprozess beschrieben, der keine Einflussnahme auf unerwünschte Schwankungen hinsichtlich bestimmter Materialkennwerte erlaubt. Die Druckschrift befasst sich mit einem kontinuierlichen Verfahren zum Sintern eines Gestrickes aus Metalldrähten auf ein nicht-gewebtes Netz aus Metallfasern zu einem Verbund. Dies wird durch die Verwendung von einem Rollenelektrodenpaar erreicht. Diese Rollen erstrecken sich einstückig über die gesamte zu sinternde Breite des Verbunds. Damit ist keine separate Steuerung der Schweißparameter über die Breite des Verbunds möglich.

In der DE 103 57 693 A1 wird ein diskontinuierliches Verfahren beschrieben, bei dem mit einer einzigen Elektrode ein Gewebe verschweißt wird. Dabei wird die Elektrode in mehreren, aufeinander folgenden Schritten in der Verfahrebene positioniert, um so großflächige Gewebe zu verschweißen. Diese Druckschrift beschreibt ein Verfahren mit nur einer einstückigen (großflächigen) Elektrodenpaarung. Damit erlauben die beschriebene Vorrichtung und das dortige Verfahren keine Einflussnahme auf unerwünschte Schwankungen hinsichtlich bestimmter Materialkennwerte. Ebenso ist dieses Verfahren aufgrund der vielen Verfahrbewegungen relativ langsam.

Aufgabe der vorliegenden Erfindung ist es, die mit Bezug auf den Stand der Technik geschilderten technischen Probleme zumindest teilweise zu lösen. Insbesondere soll eine Vorrichtung angegeben werden, die die Herstellung von metallischen Faser-Gestricken hoher Qualität auch im Rahmen einer Serienfertigung gewährleistet. Die Vorrichtung soll zudem einfach aufgebaut sein und eine hohe Schweißgeschwindigkeit ermöglichen.

Diese Aufgaben werden gelöst mit einer Vorrichtung gemäß den Merkmalen des Patentanspruchs 1 sowie einem Verfahren, wie es mit den Merkmalen des Patentanspruchs 10 beschrieben ist. Weitere vorteilhafte Ausgestaltungen sind in den jeweils abhängig formulierten Patentansprüchen aufgeführt.

Die erfindungsgemäße Vorrichtung zum Verschweißen von metallischen Fasern zu einem Gestrick mit einer vorgegebenen Breite umfasst:
- mehrere, über die Breite verteilt, zusammen die gesamte Breite (4) abdeckend, angeordnete Schweißelektrodenpaarungen, durch die die metallischen Fasern hindurchführbar sind,
- wenigstens eine Hubanordnung, die eine Relativbewegung zumindest einer Schweißelektrode einer Schweißelektrodenpaarung bewirkt,
- wenigstens eine Schweißsteuerung, die in Abhängigkeit eines Kontaktes einer Schweißelektrodenpaarung mit den metallischen Fasern einen Schweißstrom zuführt, und
- eine Vorschubsteuerung zum Bewegen des Gestricks, die in Abhängigkeit des Zustands der wenigstens einen Hubanordnung einen Vorschub des Gestricks bewirkt.

Bezüglich "der Schweißelektrodenpaarungen ist anzumerken, dass diese so angeordnet sind, dass sie zusammen die gesamte Breite des Gestricks bzw. des lockeren Verbundes von metallischen Fasern (ggf. mit Ausnahme eines nachträglich zu bearbeitenden schmalen Randbereichs) abdecken. Dazu können die Schweißelekt rodenpaarungen bevorzugt fluchtend angeordnet sein, dies ist jedoch nicht zwingend erforderlich, so dass auch eine in Vorschubrichtung des Gestricks versetzte Anordnung der Schweißelektrodenpaarungen möglich ist.

Mittels der Hubanordnung wird nun eine Relativbewegung zumindest einer Schweißelektrode bewirkt, womit insbesondere gemeint ist, dass eine der beiden Schweißelektroden während des Schweißvorganges nicht bewegt wird. Als solche ruhende Schweißelektrode ist bevorzugt die unterhalb des Verbundes angeordnete Schweißelektrode ausgeführt. Dazu relativ kann die oben angeordnete Schweißelektrode eine Hubbewegung ausführen, so dass mit der ausgelenkten Stellung, in der die Schweißelektroden die geringste Entfernung zueinander haben, das Komprimieren und Verschweißen der metallischen Fasern stattfindet.

Grundsätzlich ist es möglich, dass jede Schweißelektrodenpaarung unabhängig von den anderen mittels der Hubanordnung aktiviert wird, wobei hier verlängerte Prozesszeiten unter Umständen in Kauf genommen werden müssten. Ganz besonders bevorzugt ist jedoch eine Ausgestaltung, bei der mittels der Hubanordnung alle Schweißelektrodenpaarungen gleichzeitig bzw. parallel zueinander bewegt werden. In diesem Fall ist weiter bevorzugt, dass jede Schweißelektrodenpaarungen mit einem eigenen Transformator ausgestattet ist, um einen noch besser kontrollierbaren und reproduzierbaren Schweißprozess zu gewährleisten.

Zur Durchführung des Schweißprozesses weist vorteilhafterweise jede Schweißelektrodenpaarung eine separate Stromzufuhr bzw. sogar eine eigene Stromquelle auf. Diese können über eine gemeinsame Schweißsteuerung kontrolliert werden, es ist jedoch auch möglich, dass für jede Schweißelektrodenpaarung eine separate Schweißsteuerung vorgesehen ist. Die Schweißsteuerung hat insbesondere die Funktion, genau nur die mit dem Faser-Gestrick in Kontakt stehende Schweißelektrode mit Strom zu versorgen.

Die Vorschubsteuerung dient einer diskontinuierlichen Zuführung des Gestricks in der Weise, dass das Gestrick während des Schweißvorgangs selbst ruht und in den Zwischenphasen um einen definierten Vorschubweg weiter transportiert wird.

Gemäß einer Weiterbildung der Vorrichtung haben die Schweißelektrodenpaarungen einen Wirkbereich von 2 cm² bis 10 cm². Bevorzugt ist, dass alle Schweißelektrodenpaarungen den gleichen Wirkbereich aufweisen. Ganz besonders bevorzugt ist der Wirkbereich in der Größenordnung 3 cm² bis 6 cm². Dabei erstreckt sich der Wirkbereich einer Schweißelektrodenpaarung in Richtung der Breite des Gestricks bevorzugt über etwa 2 cm bis 3 cm.

Weiter wird auch vorgeschlagen, dass die Hubanordnung alle Schweißelektrodenpaarungen gemeinsam bewegt. Dabei ist besonders bevorzugt, dass die Hubanordnung einen Exzenterantrieb darstellt. Mit einer solchen Hubanordnung kann beispielsweise nach Art einer Nockenwelle die Relativbewegung der einzelnen Schweißelektrodenpaarungen zueinander mit hoher Frequenz und einer exakten Führung vorgenommen werden.

Ganz besonders bevorzugt ist die Ausgestaltung der Vorrichtung, wobei die Schweißsteuerung jeweils einen Transformator und einen frequenzgesteuerten Wandler umfasst, der auf die Bewegung der Hubanordnung abstimmbar ist Bei dem frequenzgesteuerten Wandler handelt es sich bevorzugt um einen so genannten "Sinusinverter". Damit ist es insgesamt möglich, eine beliebige Schweißfrequenz einzustellen, so dass sehr hohe Bearbeitungsgeschwindigkeiten hinsichtlich des Verschweißens des Faser-Gestricks möglich sind.

Um solche Vorteile gerade im Hinblick einer Serienfertigung voll ausschöpfen zu können, sind vorteilhafterweise Mittel zur Realisierung von mindestens 300 Hüben einer Schweißelektrode pro Minute vorgesehen. Besonders bevorzugt ist eine Realisierung von 300 Hüben bis 500 Hüben pro Minute der Schweißelektrode.

Gerade bei den hier auftretenden hohen thermischen Belastungen ist zur Beibehaltung eines Schweißprozesses mit gleich bleibender Qualität eine Kühlung hinsichtlich der Schweißelektrodenpaarung vorteilhaft. Dazu sind die Schweißelektroden bevorzugt mit einer Apparatur ausgeführt, die mit einem Wärmetauschermedium betreibbar ist

Schließlich wird auch vorgeschlagen, dass eine der Vorrichtung vorgelagerte Lageerkennungsanlage vorgesehen ist, mit der die Lage der metallischen Fasern relativ zur Vorrichtung zumindest überprüft oder eingestellt werden kann. Vorteilhafterweise ist die Lageerkennungsanlage auch dazu geeignet, zunächst eine Überprüfung der Relativlage der metallischen Fasern bezüglich der Schweißelektrodenpaarung vorzunehmen, und die Lage, falls erforderlich, zu korrigieren. Dies kann beispielsweise mit einem querbeweglichen Längsantrieb des Vorschubes erreicht werden. Damit kann sichergestellt werden, dass das Gestrick bezüglich der Anordnung der Schweißelektrodenpaarungen exakt ausgerichtet ist.

Des Weiteren ist vorteilhaft, dass der Vorrichtung eine Säumungsanlage nachgeschaltet ist, die einen Randbereich des Gestricks zumindest verdichtet oder verschweißt, vorteilhafterweise sogar beide Prozesse durchführt. Die Säumungsanlage hat insbesondere die Aufgabe, den Rand zu verfestigen und damit eine weitere Handhabung des Faser-Gestricks zu ermöglichen. Hierfür können besondere Schweißnähte im Randbereich vorgesehen sein, es ist jedoch auch möglich, dass Teile der Fasern dort abgetrennt oder mit Zusatzelementen, wie beispielsweise folienartigen Streifen, verbunden werden.

Gemäß einem weiteren Aspekt der Erfindung wird ein Verfahren zum Verschweißen von metallischen Fasern zu einem Gestrick mit einer vorgegebenen Breite vorgeschlagen, welches zumindest die folgenden Schritte umfasst:
a) Zuführen eines Verbundes aus metallischen Fasern zu einer Vorrichtung zum Verschweißen der Fasern zu einem Gestrick,
b) separates Schweißen von mehreren Teilabschnitten des Verbundes in einem Zeitabschnitt, in dem der Verbund ruht.

Das erfindungsgemäβe Verfahren wird mit der vorstehend erfindungsgemäß beschriebenen Vorrichtung durchgeführt. Damit ist das Verfahren insbesondere zur diskontinuierlichen Herstellung von metallischen Faser-Gestricken im Serienbetrieb geeignet.

Bevorzugt die die Ausgestaltung des Verfahrens, bei dem Schritt b) einen Schweißvorgang in einem einzelnen Teilabschnitt von weniger als 4 Millisekunden umfasst. Das bedeutet insbesondere, dass damit die Hubbewegung einer Schweißelektrode, das damit verbundene Verpressen der metallischen Fasern und das Verschweißen mittels einer Stromzufuhr in diesem Teilabschnitt durchgeführt wird. Für den Fall, dass Schweißelektrodenpaarungen mit einem relativ kleinen Wirkbereich zum Einsatz kommen, z.B. kleiner als 10 mm² (Quadratmillimeter), so wird Schritt b) bevorzugt in einem Bereich von 0,5 bis 2 Millisekunden ausgeführt. Damit kann eine ungewünschte Wärmeleitung vermieden werden.

Weiter wird auch vorgeschlagen, dass Schritt b) mit einer Wiederholgeschwindigkeit von mindestens 300 Schweißvorgängen pro Minute durchgeführt wird. Ganz besonders bevorzugt ist eine Wiederholgeschwindigkeit von bis zu 500 Schweißvorgängen pro Minute.

Einer Weiterbildung des Verfahrens zufolge werden die einzelnen Schweißvorgänge mit mindestens einem der folgenden Parameter durchgeführt:
- mit einem Schweißelektrodenanpressdruck im Bereich von 5.000 bis 50.000 N/cm²,
- mit einem (effektiven) Schweißstrom im Bereich von 300 bis 1.200 Ampere,
- mit einer Schweißleistung im Bereich von 500 bis 20.000 Watt.

Bei den angegebenen Schweißparameters konnten besonders dauerhafte und gleichmäßig verteilte Schweißverbindungen zwischen den metallischen Fasern generiert werden, so dass schließlich ein Gestrick gleicher Qualität erzeugt werden kann. Bezüglich des Schweißelektrodenanpressdruck sei angemerkt, dass hier bei Wirkbereichen der Schweißelektrodenpaarungen von mindestens 2 cm² bevorzugt im Bereich von 20.000 bis 50.000 N/cm² gearbeitet werden sollte. Der angegeben (effektiven) Schweißstrom sollte besonders bevorzugt im Bereich von 400 bis 800 Ampere gewählt werden, wobei ggf. während eines Hubes eine Mehrzahl solcher Schweißimpulse generiert werden (z.B. ein Probeimpulse, wobei Kennwerte wie z.B. Stromstärke und/oder Spannungsabfall erfasst werden, und in Abhängigkeit der Kennwerte mindestens ein weiterer Arbeitsimpuls innerhalb des selben Wirkbereichs durchgeführt wird).

Vorteilhafterweise wird Schritt a) mit einem mittleren Vorschub von mindestens 3 m/min durchgeführt. Besonders bevorzugt sind höhere Vorschübe, beispielsweise von bis zu 6 m/min oder 8 m/min.

Gerade um auch einen Fehlkontakt der Schweißelektroden miteinander bzw. einer unzureichenden Überdeckung des Wirkbereichs mit dem Verbund zu vermeiden, wird vorgeschlagen, dass der Verbund vor Schritt a) relativ zur Vorrichtung zum Verschweißen ausgerichtet wird. Das heißt insbesondere, dass der Verbund quer zur Vorrichtung ausgerichtet wird. Im Hinblick auf die Ausrichtung in Vorschubrichtung ist anzumerken, dass bevorzugt keine wesentliche Überlappungen der Schweißbereiche eintreten sollen, so dass der diskontinuierliche Vorschub sich im wesentlichen an der Erstreckung des Wirkbereichs in Vorschubrichtung orientiert.

Gemäß noch einer Weiterbildung des Verfahrens wird das Gestrick nach Schritt b) einer Säumungsanlage zugeführt, wobei eine vorgegebene Breite des Gestricks eingestellt wird. Hierzu ist es möglich, überstehende Teilbereiche des Gestricks zu entfernen, beispielsweise abzuschneiden. Es kann jedoch auch ein Umklappen, Verschweißen oder einfaches Verdichten vorgenommen werden, so dass letztendlich die vorgegebene Breite erreicht wird. Die Säumungsanlage kann auch dazu genutzt werden, Verstärkungselemente, Dichtmassen und dergleichen an den Randbereichen der Gestricke dauerhaft zu positionieren.

Bevorzugt ist ein Verfahren, wobei ein Gestrick mit zumindest einer der folgenden Eigenschaften erzeugt wird:
- Fasern mit einem hydraulischen Faserdurchmesser von 10 bis 100 µm,
- Fasern mit einem Verhältnis von Faserlänge zu hydraulischem Faserdurchmesser von 50 bis 5000,
- Fasern mit einer Varianz des Faserdurchmessers von höchstens 50 %,
- Breite des Gestricks von 5 bis 500 mm,
- Höhe des Gestricks von 0,1 bis 10 mm,
- Flächengewicht des Gestricks von 100 bis 5000 g/m²,
- Festigkeitssteigerung vom Verbund hin zum Gestrick von mindestens 3,
- Porosität des Gestricks von 50 bis 85 %.

Die Fasern können grundsätzlich einen beliebigen Faserquerschnitt (rund, eckig,...) aufweisen. Im Hinblick auf deren Gestalt, wird deshalb hier auf einen hydraulischem Faserdurchmesser abgestellt, der sich nach folgender Formel bestimmen lässt: 4*A/U, wobei A die Faserquerschnittsfläche und U den Faserumfang beschreibt. Bevorzugt liegt der hydraulische Faserdurchmesser in einem Bereich von 20 bis 50 µm (Mikrometer). Es können auch verschiedene Faserquerschnitte in einem Gestrick verwendet werden, insbesondere als Gemisch oder als einzelne, geschichtete Lagen. Die Anordnung der Fasern zueinander spielt keine wesentliche Rolle, so dass mit dem Begriff "Gestrick" diesbezüglich keine Einschränkung vorgenommen wird - bevorzugt ist eine so genannte Wirrlage, bei der die Fasern in einer zufälligen Anordnung zueinander vorliegen.

Die Fasern weisen zudem vorteilhafter weise ein Verhältnis von Faserlänge zu hydraulischem Faserdurchmesser (L/d_{hydr}) im oben angegebenen Bereich auf, wobei ein Bereich von 200 bis 1000 bevorzugt ist.

Die Varianz des Faserdurchmessers wird gerade für sehr gleichmäßige Gestrickeigenschaften bevorzugt auf 10 % begrenzt, wobei die Varianz hier eine Abweichung nach oben und nach unten meint, also z.B. + 10 % und - 10 % des gewünschten Faserdurchmessers.

Im Hinblick auf einen Einsatz derartiger Gestricke im Automobilbereich und zur Vermeidung von sehr kostenintensiven Schweißanlagen sind Getricke mit einer Breite im Bereich von 20 bis 200 mm und einer Höhe von 0,2 bis 1,5 mm bevorzugt. Im Hinblick auf das Flächengewicht eines solchen Gestricks ist ein Bereich von 300 bis 3000 g/m² bevorzugt.

Zur Veranschaulichung der Schweißqualität bzw. der Anzahl und Art der generierten Schweißverbindungen wird zudem eine Festigkeitssteigerung vom Verbund hin zum Gestrick angegeben. Damit ist gemeint, dass der Verbund aus Fasern bereits in einer gewissen Weise auf Zug beansprucht werden kann, da die Fasern sich aufgrund ihrer Krümmung oder Lage bereits verharkt haben. Beim Schweißen wird nun diese "Zugfestigkeit" gesteigert, wobei hier die Festigkeitssteigerung mindestens um den Faktor 3, insbesondere zumindest um den Faktor 6 und unter Umständen sogar um den Faktor 10, erreicht werden sollte.

Das mit der erfindungsgemäßen Vorrichtung bzw. dem erfindungsgemäßen Verfahren hergestellte Gestrick wird bevorzugt zum Filtern von Abgasen verwendet. Darüber hinaus wird die Integration eines solchen Gestrickes in eine Abgasbehandlungskomponente zur Reinigung von Abgasen vorgeschlagen.

Die Erfindung sowie das technische Umfeld werden nachfolgend anhand der Figuren näher erläutert. Dabei zeigen die Figuren besonders bevorzugte Ausführungsvarianten, auf die die Erfindung jedoch nicht begrenzt ist. Es zeigen schematisch:
- Fig. 1:: eine erste Ausführungsvariante einer erfindungsgemäßen Vorrichtung,
- Fig. 2:: eine Draufsicht auf ein Gestrick,
- Fig. 3:: eine weitere Ausführungsvariante der erfindungsgemäßen Vorrichtung,
- Fig. 4:: ein Detail eines Fasergestricks, und
- Fig. 5:: eine Ausführungsvariante einer Abgasbehandlungskomponente.

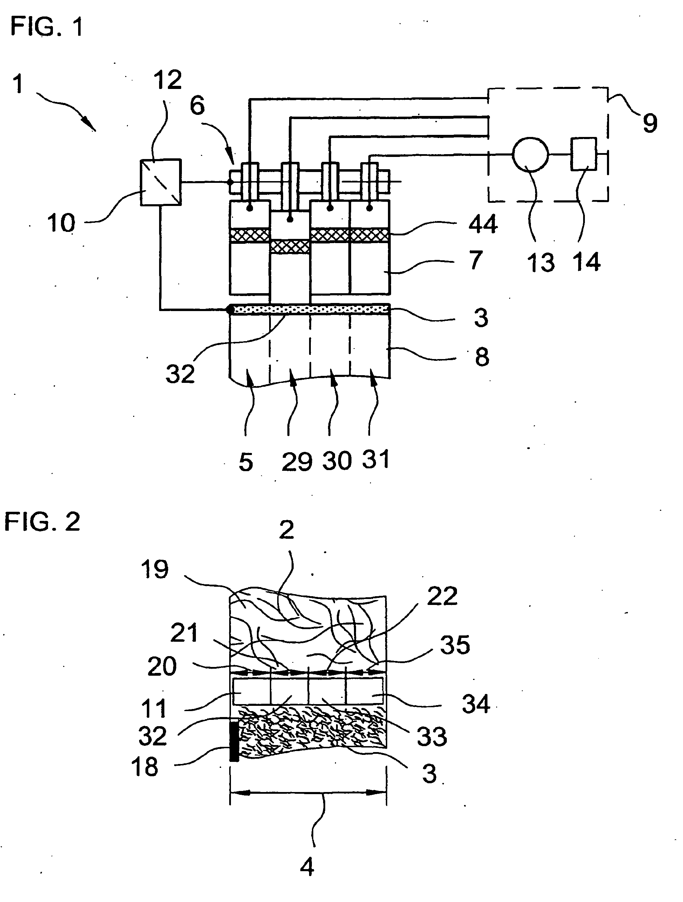

Fig. 1 zeigt schematisch eine erfindungsgemäße Vorrichtung 1 zum Verschweißen von metallischen Fasern 2 zu einem Gestrick 3. Dabei sind mehrere, nämlich vier, über die Breite 4 des Gestricks 3 verteilt angeordnete Schweißelektrodenpaarungen 5, 29, 30, 31 dargestellt, durch die die metallischen Fasern 2 hindurchgeführt werden. Zur gezielten Erzeugung einer Relativbewegung der Schweißelektrodenpaarungen zueinander ist eine Hubanordnung 6 vorgesehen, mit der die Relativbewegung einer oben angeordneten ersten Schweißelektrode 7 gegenüber einer unten, unbeweglich angeordneten zweiten Schweißelektrode 8 erzeugt wird. Jede Schweißelektrodenpaarung 5, 29, 30, 31 ist mit einer gemeinsamen Schweißsteuerung 9 verbunden. Teil dieser Schweißsteuerung 9 ist für jede Schweißelektrodenpaarung 5, 29, 30, 31 ein Transformator 13 und ein frequenzgesteuerter Wandler 14. Damit ist eine gezielte Stromzufuhr über die Schweißelektroden 7, 8 hin zum Gestrick 3 gewährleistet.

In der veranschaulichten Stellung der Vorrichtung 1 ist die zweite Schweißelektrodenpaarung 29 gerade im Schweißprozess, wobei die oben dargestellte Schweißelektrode 7 im zweiten Wirkbereich 32 mit dem Gestrick 3 in Kontakt ist und einen Stromfluss hindurch zur Erzeugung von Schweißverbindungen realisiert. Über die angedeutete Vorschubsteuerung 10, die vorteilhafterweise mit dem Exzenterantrieb 12 koordiniert arbeitet, ist sichergestellt, dass das Gestrick 3 während der Schweißbearbeitung ruht. In Anbetracht der hohen Bearbeitungsgeschwindigkeiten bzw. den hohen Relativgeschwindigkeiten der oben dargestellten ersten Schweißelektrode 7 sind Kompensations- und/oder Isolationsmittel, beispielsweise in Form eines Elastomers 44, vorgesehen. Das Elastomer 44 bewirkt einerseits eine relativ ruhige Lage der bewegten Schweißelektrode im untern Umkehrpunkt der Schweißelektrode 7 und zum anderen eine elektrische Entkoppelung der Schweißelektrode 7 von der restlichen Vorrichtung.

Fig. 2 soll nun die einzelnen Einwirkungsbeieiche der Vorrichtung 1 auf das Gestrick 3 veranschaulichen. Oben in Fig. 2 dargestellt ist zunächst ein lockerer Verbund 19 aus metallischen Fasern 2, der schließlich der Vorrichtung 1 zugeführt wird. Über die Breite 4 wirken nun die Mehrzahl von Schweißelektrodenpaarungen mit den Wirkbereichen 11, 32, 33, 34 auf den Verbund 19 ein und generieren verdichtete Teilabschnitte 20, 21, 22, 35 mit Schweißverbindungen. Schließlich kann das Gestrick 3 im Randbereich 18 weiter verdichtet bzw. zusätzlich behandelt werden. Außerdem kann ggf. auch gewünscht werden, das keine vollständige Schweißverbindung über die gesamte Breite des Getrickes gewünscht ist, was mittels eine Distanz zwischen den einzelnen Scheißelektrodenpaarungen erreicht werden kann. Die Scheißelektrodenpaarungen können zum Ausgleich bei einem anschließenden Hub ggf. versetzt aufgesetzt werden.

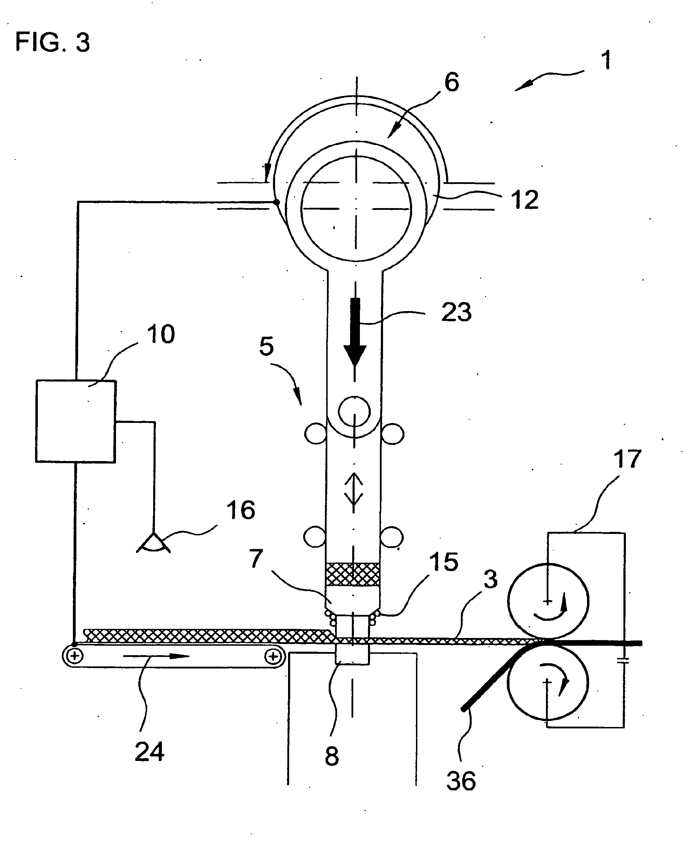

Fig. 3 zeigt in einer Seitenansicht eine weitere Ausführungsvariante einer erfindungsgemäßen Vorrichtung 1. Dargestellt ist zunächst wiederum eine erste Schweißelektrodenpaarung 5 umfassend eine erste Schweißelektrode 7 und eine zweite Schweißelektrode 8, zwischen die hindurch diskontinuierlich das Gestrick 3 hindurch geführt wird. Dazu ist eine Vorschubsteuerung 10 zur Realisierung eines Vorschubs 24 vorgesehen, die hier mit einer Lageerkennungsanlage 16 sowie der Hubanordnung 6 zusammenwirkt. Nach Realisierung des gewünschten Vorschubs 24 wird die (veranschaulichte) erste Schweißelektrode 7 (wie gleichzeitig auch alle weiteren Schweißelektroden der Vorrichtung) mittels des dargestellten Exzenterantriebs 12 nach unten bewegt, wobei das Gestrick 3 komprimiert und verschweißt wird. Dabei wird ein Elektrodenanpressdruck 23 im bevorzugten Bereich von 20.000 bis 30.000 N/cm² realisiert.

Um das gewünschte Schweißverfahren mit hoher Effektivität und gleich bleibender Qualität durchführen zu können, wird zudem eine Kühlung 15 an der Schweißelektrode 7 vorgesehen.

Der Vorrichtung 1 nachgeschaltet ist eine Säumungsanlage 17, hier in Form einer Rollnaht-Schweißanlage. Dabei wird im Randbereich 18 eine metallische Randfolie 36 umgeschlagen und mit dem Gestrick 3 verschweißt.

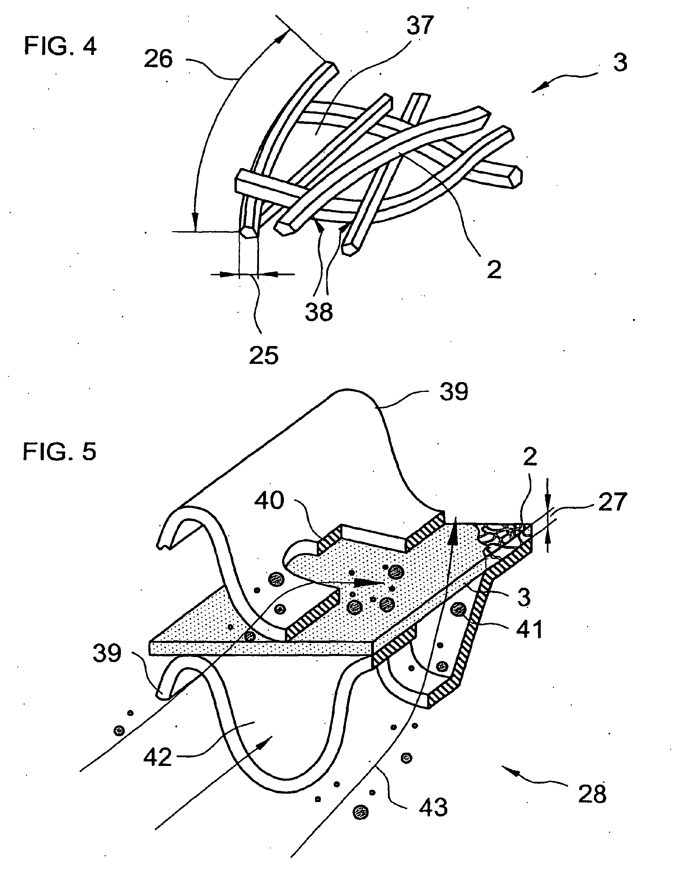

Fig. 4 veranschaulicht ein Detail des Gestricks 3, wobei insbesondere die Faserlänge 26 und der Faserdurchmesser 25 veranschaulicht sind. Die während des Schweißverfahrens aneinander gepressten Fasern 2 bilden infolge der Widerstandserwärmung durch den Schweißstrom an den Kontaktbereichen vielfach Schweißverbindungen 38 aus. Gleichwohl sind eine Mehrzahl von Durchlässen 37 im Gestrick 3 realisiert, so dass sich ein solches Gestrick 3 insbesondere als Dämpfungs- oder Filtermaterial einsetzen lässt.

Fig. 5 veranschaulicht eine Abgasbehandlungskomponente 28 zum Filtern von Abgasen. Die Abgase werden in Strömungsrichtung 43 durch die Abgasbehandlungskomponente 28 hindurchgeführt, wobei zum Beispiel darin enthaltene Partikel 41 an den Fasern 2 des Gestrickes 3 einer vorgegebenen Höhe 27 zuruckgehalten werden. Die Abgasbehandlungskomponente 28 weist dazu eine Mehrzahl von Lagen 39 auf, die für das Abgas durchströmbare Kanäle 42 bilden. Zur Generierung einer nicht-laminaren Strömung können zusätzlich Leitschaufeln 40 vorgesehen sein, die eine Ablenkung des Gasstromes hin zum Gestrick 3 bewirken. Eine solche Abgasbehandlungskomponente ist bevorzugt in Abgassystemen von Automobilen einzusetzen.

**Bezugszeichenliste**

| | |
|---|---|
| 1 | Vorrichtung |
| 2 | Faser |
| 3 | Gestrick |
| 4 | Breite |
| 5 | erste Schweißelektrodenpaarung |
| 6 | Hubanordnung |
| 7 | erste Schweißelektrode |
| 8 | zweite Schweißelektrode |
| 9 | Schweißsteuerung |
| 10 | Vorschubsteuerung |
| 11 | erster Wirkbereich |
| 12 | Exzenterantrieb |
| 13 | Transformator |
| 14 | Wandler |
| 15 | Kühlung |
| 16 | Lageerkennungsanlage |
| 17 | Säumungsanlage |
| 18 | Randbereich |
| 19 | Verbund |
| 20 | erster Teilabschnitt |
| 21 | zweiter Teilabschnitt |
| 22 | dritter Teilabschnitt |
| 23 | Elektrodenanpresskraft |
| 24 | Vorschub |
| 25 | Faserdurchmesser |
| 26 | Faserlänge |
| 27 | Höhe |
| 28 | Abgasbehandlungskomponente |
| 29 | zweite Schweißelektrodenpaarung |
| 30 | dritte Schweißelektrodenpaarung |
| 31 | vierte Schweißelektrodenpaarung |
| 32 | zweiter Wirkbereich |
| 33 | dritter Wirkbereich |
| 34 | vierter Wirkbereich |
| 35 | vierter Teilbereich |
| 36 | Randfolie |
| 37 | Durchlass |
| 38 | Schweißverbindung |
| 39 | Lage |
| 40 | Leitschaufel |
| 41 | Partikel |
| 42 | Kanal |
| 43 | Strömungsrichtung |
| 44 | Elastomer |

## Patentansprüche

1. Vorrichtung (1) zum Verschweißen von metallischen Fasern (2) zu einem Gestrick (3) mit einer vorgegebenen Breite (4) umfassend:
- mehrere, über die Breite (4) verteilt-, zusammen die gesamte Breite (4) abdeckend, angeordnete Schweißelektrodenpaarungen (5), durch die die metallischen Fasern (2) hindurch führbar sind,
- wenigstens eine Hubanordnung (6), die eine Relativbewegung zumindest einer Schweißelektrode (7) einer Schweißelektrodenpaarung (5) bewirkt,
- wenigstens eine Schweißsteuerung (9), die in Abhängigkeit eines Kontaktes einer Schweißelektrodenpaarungen (5) mit den metallischen Fasern (2) einen Schweißstrom zuführt, und
- eine Vorschubsteuerung (10) zum Bewegen des Gestricks (3), die in Abhängigkeit des Zustandes der wenigstens einen Hubanordnung (6) einen Vorschub des Gestricks (3) bewirkt.

2. Vorrichtung (1) nach Patentanspruch 1, **dadurch gekennzeichnet, dass** die Schweißelektrodenpaarungen (5) einen Wirkbereich (11) von 2 bis 10 cm² haben.

3. Vorrichtung (1) nach Patentanspruch 1 oder 2, **dadurch gekennzeichnet, dass** die Hubanordnung (6) alle Schweißelektrodenpaarungen (5) gemeinsam bewegt.

4. Vorrichtung (1) nach einem der vorhergehenden Patentansprüche, **dadurch gekennzeichnet, dass** die Hubanordnung (6) einen Exzenterantrieb (12) ist.

5. Vorrichtung (1) nach einem der vorhergehenden Patentansprüche, **dadurch gekennzeichnet, dass** die Schweißsteuerung (9) jeweils einen Transformator (13) und einen frequenzgesteuerten Wandler (14) umfasst, der auf die Bewegung der Hubanordnung (6) abstimmbar ist.

6. Vorrichtung (1) nach einem der vorhergehenden Patentansprüche, **dadurch gekennzeichnet, dass** Mittel zur Realisierung von mindestens 300 Hübe einer Schweißelektrode (7) pro Minute vorgesehen sind.

7. Vorrichtung (1) nach einem der vorhergehenden Patentansprüche, **dadurch gekennzeichnet, dass** die Schweißelektrodenpaarung (5) eine Kühlung (15) aufweist.

8. Vorrichtung (1) nach einem der vorhergehenden Patentansprüche, **dadurch gekennzeichnet, dass** eine vorgelagerte Lageerkennungsanlage (16) vorgesehen ist, mit der die Lage der metallischen Fasern (2) relativ zur Vorrichtung (1) zumindest überprüft oder eingestellt werden kann.

9. Vorrichtung (1) nach einem der vorhergehenden Patentansprüche, **dadurch gekennzeichnet, dass** der Vorrichtung (1) eine Säumungsanlage (17) nachgeschaltet ist, die einen Randbereich (18) des Gestricks (3) zumindest verdichtet oder verschweißt.

10. Verfahren zum Verschweißen von metallischen Fasern (2) zu einem Gestrick (3) mit einer vorgegebenen Breite (4), wobei das Verfahren mit einer Vorrichtung (1) gemäß einem der vorhergehenden Patentansprüche durchgeführt wird und zumindest die folgenden Schritte umfasst:
a) Zuführen eines Verbundes (19) aus metallischen Fasern (2) zu einer Vorrichtung (1) zum Verschweißen der Fasern (2) zu einem Gestrick (3),
b) Separates Schweißen von mehreren Teilabschnitten (20) des Verbundes (19) in einem Zeitabschnitt, in dem der Verbund (19) ruht.

11. Verfahren nach Patentanspruch 10, **dadurch gekennzeichnet, dass** Schritt b) einen Schweißvorgang in einem einzelnen Teilabschnitt (20) von weniger als 4 Millisekunden umfasst.

12. Verfahren nach Patentanspruch 10 oder 11, **dadurch gekennzeichnet, dass** Schritt b) mit einer Wiederholgeschwindigkeit von mindestens 300 Schweißvorgängen pro Minute durchgeführt wird.

13. Verfahren nach einem der Patentansprüche 10 bis 12, **dadurch gekennzeichnet, dass** die einzelnen Schweißvorgänge mit mindestens einem der nachfolgenden Parameter durchgeführt werden:
- mit einem Schweißelektrodenanpressdruck im Bereich von 5.000 bis 50.000 N/cm²,
- mit einem Schweißstrom im Bereich von 300 bis 1.200 Ampere,
- mit einer Schweißleistung im Bereich von 500 bis 20.000 Watt.

14. Verfahren nach einem der Patentansprüche 10 bis 13, **dadurch gekennzeichnet, dass** Schritt a) mit einem mittleren Vorschub (24) von mindestens 3 Meter pro Minute durchgeführt wird.

15. Verfahren nach einem der Patentansprüche 10 bis 14, **dadurch gekennzeichnet, dass** der Verbund (19) vor Schritt a) relativ zur Vorrichtung (1) zum Verschweißen ausgerichtet wird.

16. Verfahren nach einem der Patentansprüche 10 bis 15, **dadurch gekennzeichnet, dass** das Gestrick (3) nach Schritt b) einer Säumungsanlage (17) zugeführt wird, wobei eine vorgegebene Breite (4) des Gestricks (3) eingestellt wird.

17. Verfahren nach einem der Patentansprüche 10 bis 16, **dadurch gekennzeichnet, dass** das Gestrick (3) mit zumindest einer der folgenden Eigenschaften erzeugt wird:
- Fasern (2) mit einem hydraulischen Faserdurchmesser (25) von 10 bis 100 µm,
- Fasern (2) mit einem Verhältnis von Faserlänge (26) zu hydraulischem Faserdurchmesser (25) von 50 bis 5000,
- Fasern (2) mit einer Varianz des Faserdurchmessers (25) von höchstens 50%,
- Breite (4) des Gestricks (3) von 5 bis 500 mm,
- Höhe (27) des Gestricks (3) von 0,1 bis 10 mm,
- Flächengewicht des Gestricks (3) von 100 bis 5000 g/m²,
- Festigkeitssteigerung vom Verbund (19) hin zum Gestrick (3) von mindestens 3,
- Porosität des Gestricks von 50 bis 85 %.

## Claims

1. Apparatus (1) for welding metallic fibers (2) to form a knitted fabric (3) having a predetermined width (4), comprising:
- a plurality of welding electrode pairs (5) which are arranged so as to cover the entire width (4) and through which the metallic fibers (2) can be passed,
- at least one stroke arrangement (6) which effects a relative movement of at least one welding electrode (7) of a welding electrode pair (5),
- at least one welding control (9) which feeds a welding current as a function of a contact between a welding electrode pair (5) and the metallic fibers (2), and
- a feed control (10) for moving the knitted fabric (3), said feed control (10) feeding the knitted fabric (3) as a function of the state of the at least one stroke arrangement (6).

2. Apparatus (1) as claimed in claim 1, **characterized in that** the welding electrode pairs (5) have an effective area (11) of 2 to 10 cm².

3. Apparatus (1) as claimed in claim 1 or 2, **characterized in that** the stroke arrangement (6) moves all the welding electrode pairs (5) together.

4. Apparatus (1) as claimed in one of the preceding claims, **characterized in that** the stroke arrangement (6) is an eccentric drive (12).

5. Apparatus (1) as claimed in one of the preceding claims, **characterized in that** the welding control (9) in each case comprises a transformer (13) and a frequency-controlled converter (14), which can be matched to the movement of the stroke arrangement (6).

6. Apparatus (1) as claimed in one of the preceding claims, **characterized in that** means are provided for realizing at least 300 strokes of a welding electrode (7) per minute.

7. Apparatus (1) as claimed in one of the preceding claims, **characterized in that** the welding electrode pair (5) has a cooling system (15).

8. Apparatus (1) as claimed in one of the preceding claims, **characterized in that** a position-recognition unit (16) situated upstream is provided, with which the position of the metallic fibers (2) relative to the apparatus (1) can be at least checked or set.

9. Apparatus (1) as claimed in one of the preceding claims, **characterized in that** a seaming unit (17) is arranged downstream of the apparatus (1), said seaming unit (17) at least compacting or welding an edge region (18) of the knitted fabric (3).

10. Method for welding metallic fibers (2) to form a knitted fabric (3) having a predetermined width (4), the method being conducted with an apparatus as claimed in the preceding claims, comprising at least the following steps:
a) feeding a composite (19) of metallic fibers (2) to an apparatus (1) for welding the fibers (2) to form a knitted fabric (3),
b) separate welding of a plurality of sections (20) of the composite (19) in a time segment in which the composite (19) is stationary.

11. Method as claimed in claim 10, **characterized in that** step b) comprises a welding operation in an individual section (20) of less than 4 milliseconds.

12. Method as claimed in claim 10 or 11, **characterized in that** step b) is carried out at a repeat rate of at least 300 welding operations per minute.

13. Method as claimed in one of claims 10 to 12, **characterized in that** the individual welding operations are carried out with at least one of the following parameters:
- with a welding electrode contact pressure within the range of 5000 to 50000 N/cm²,
- with a welding current within the range of 300 to 1200 amps,
- with a welding power within the range of 500 to 20000 watts.

14. Method as claimed in one of claims 10 to 13, **characterized in that** step a) is carried out with an average feed (24) of at least 3 meters per minute.

15. Method as claimed in one of claims 10 to 14, **characterized in that** the composite (19) is oriented before step a) relative to the apparatus (1) for the welding.

16. Method as claimed in one of claims 10 to 15, **characterized in that** the knitted fabric (3) is fed to a seaming unit (17) after step b), a predetermined width (4) of the knitted fabric (3) being set.

17. Method as claimed in one of claims 10 to 16, **characterized in that** the knitted fabric (3) is produced with at least one of the following properties:
- fibers (2) having a hydraulic fiber diameter (25) of 10 to 100 µm,
- fibers (2) having a ratio of fiber length (26) to hydraulic fiber diameter (25) of 50 to 5000,
- fibers (2) having variance of the fiber diameter (25) of at most 50%,
- width (4) of the knitted fabric (3) of 5 to 500 mm,
- height (27) of the knitted fabric (3) of 0.1 to 10 mm,
- weight per unit area of the knitted fabric (3) of 100 to 5000 g/m²,
- increase in strength from the composite (19) to the knitted fabric (3) by at least a factor of 3,
- porosity of the knitted fabric of 50 to 85%.

## Revendications

1. Dispositif (1) pour le soudage de fibres métalliques (2) en un tricot (3) présentant une largeur prédéterminée (4), comprenant:
- plusieurs paires d'électrodes de soudage (5) disposées de façon répartie sur la largeur (4) et recouvrant ensemble toute la largeur (4), à travers lesquelles les fibres métalliques (2) peuvent être guidées,
- au moins un dispositif de levage (6), qui provoque un mouvement relatif d'au moins une électrode de soudage (7) d'une paire d'électrodes de soudage (5),
- au moins une commande de soudage (9), qui fournit un courant de soudage en fonction d'un contact d'une paire d'électrodes de soudage (5) avec les fibres métalliques (2), et
- une commande d'avance (10) pour déplacer le tricot (3), qui provoque une avance du tricot (3) en fonction de l'état dudit au moins dispositif de levage (6).

2. Dispositif (1) selon la revendication 1, **caractérisé en ce que** les paires d'électrodes de soudage (5) présentent une zone active (11) de 2 à 10 cm².

3. Dispositif (1) selon la revendication 1 ou 2, **caractérisé en ce que** le dispositif de levage (6) déplace ensemble toutes les paires d'électrodes de soudage (5).

4. Dispositif (1) selon l'une quelconque des revendications précédentes, **caractérisé en ce que** le dispositif de levage (6) est un entraînement excentrique (12).

5. Dispositif (1) selon l'une quelconque des revendications précédentes, **caractérisé en ce que** la commande de soudage (9) comprend respectivement un transformateur (13) et un convertisseur régulé en fréquence (14), qui peut être accordé sur le mouvement du dispositif de levage (6).

6. Dispositif (1) selon l'une quelconque des revendications précédentes, **caractérisé en ce qu'**il est prévu des moyens pour la réalisation d'au moins 300 levées d'une électrode de soudage (7) par minute.

7. Dispositif (1) selon l'une quelconque des revendications précédentes, **caractérisé en ce que** la paire d'électrodes de soudage (5) présente un refroidissement (15).

8. Dispositif (1) selon l'une quelconque des revendications précédentes, **caractérisé en ce qu'**il est prévu une installation de reconnaissance de position en amont (16), avec laquelle la position des fibres métalliques (2) par rapport au dispositif (1) peut au moins être contrôlée ou réglée.

9. Dispositif (1) selon l'une quelconque des revendications précédentes, **caractérisé en ce que** le dispositif (1) est suivi par une installation de bordage (17), qui au moins comprime ou soude une région de bord (18) du tricot (3).

10. Procédé pour le soudage de fibres métalliques (2) en un tricot (3) présentant une largeur prédéterminée (4), dans lequel le procédé est mis en oeuvre avec un dispositif (1) selon l'une quelconque des revendications précédentes et comprend au moins les étapes suivantes:
a) fourniture d'un composite (19) de fibres métalliques (2) à un dispositif (1) pour le soudage des fibres (2) en un tricot (3);
b) soudage séparé de plusieurs portions partielles (20) du composite (19) en un laps de temps pendant lequel le composite (19) est au repos.

11. Procédé selon la revendication 10, **caractérisé en ce que** l'étape b) comprend une opération de soudage dans une portion partielle individuelle (20) de moins de 4 millisecondes.

12. Procédé selon la revendication 10 ou 11, **caractérisé en ce que** l'on exécute l'étape b) avec une vitesse de répétition d'au moins 300 opérations de soudage par minute.

13. Procédé selon l'une quelconque des revendications 10 à 12, **caractérisé en ce que** l'on exécute les opérations de soudage individuelles avec au moins un des paramètres suivants:
- avec une pression d'application des électrodes de soudage comprise entre 5 000 et 50 000 N/cm²;
- avec un courant de soudage compris entre 300 et 1 200 ampères;
- avec une puissance de soudage comprise entre 500 et 20 000 watts.

14. Procédé selon l'une quelconque des revendications 10 à 13, **caractérisé en ce que** l'on exécute l'étape a) avec une avance moyenne (24) d'au moins 3 mètres par minute.

15. Procédé selon l'une quelconque des revendications 10 à 14, **caractérisé en ce que** l'on oriente le composite (19) avant l'étape a) par rapport au dispositif (1) pour le soudage.

16. Procédé selon l'une quelconque des revendications 10 à 15, **caractérisé en ce que** l'on envoie le tricot (3) à une installation de bordage (17) après l'étape b), dans lequel on règle une largeur prédéterminée (4) du tricot (3).

17. Procédé selon l'une quelconque des revendications 10 à 16, **caractérisé en ce que** l'on produit le tricot (3) avec au moins une des propriétés suivantes:
- des fibres (2) avec un diamètre hydraulique de fibre (25) de 10 à 100 µm,
- des fibres (2) avec un rapport de la longueur de fibre (26) au diamètre hydraulique de fibre (25) de 50 à 5 000,
- des fibres (2) avec une variance du diamètre de fibre (25) de 50 % au maximum,
- une largeur (4) du tricot (3) de 5 à 500 mm,
- une hauteur (27) du tricot (3) de 0,1 à 10 mm,
- un grammage du tricot (3) de 100 à 5 000 g/m²,
- une augmentation de la résistance du composite (19) au tricot (3) d'au moins 3,
- une porosité du tricot de 50 à 85 %.
